# EUROPEAN PATENT SPECIFICATION

(11) **EP 3 062 479 B1**
(45) Date of publication and mention of the grant of the patent: **30.12.2020**
(21) Application number: 14856207.7
(22) Date of filing: 29.07.2014
(51) Int. Cl.: H04L 29/08, G06F 21/53, H04L 29/06

(54) **SECURITY SERVICE CUSTOMIZING METHOD AND APPARATUS**
VERFAHREN UND VORRICHTUNG ZUR ANPASSUNG EINES SICHERHEITSSERVICE
PROCÉDÉ ET APPAREIL DE PERSONNALISATION DE SERVICE DE SÉCURITÉ

(30) Priority: 25.10.2013 CN 201310514151
(43) Date of publication of application: 31.08.2016
(73) Proprietor: ZTE Corporation, Shenzhen, Guangdong 518057 (CN)
(72) Inventor: CHEN, Xiaohua, Shenzhen Guangdong 518057 (CN)
(74) Representative: Mozzi, Matteo
(86) International application number: PCT/CN2014/083229
(87) International publication number: WO 2015/058569

(56) References cited:
- WO-A1-2013/138979
- CN-A- 102 307 185
- CN-A- 102 708 316
- CN-A- 102 904 892
- CN-A- 103 139 159
- CN-A- 103 139 159
- CN-A- 103 607 426
- JP-A- 2013 196 343
- US-A1- 2011 219 434
- US-A1- 2013 036 449
- US-A1- 2013 227 561
- US-A1- 2013 227 561
- US-B1- 8 528 101
- Zhi-Yuan Hu: "SAFETY COMMUNICATION AMONG VIRTUAL MACHINES IN CLOUD COMPUTING FRAMEWORK", , 5 June 2013 (2013-06-05), pages 1-32, XP055288737, Retrieved from the Internet: URL:Machine translation from CN 103139159 A [retrieved on 2016-07-15]

## Description

### Technical Field

The embodiments of the disclosure relate to the field of information security, and in particular to a method and device for customizing a security service.

### Background

A cloud computing data centre not only manages equipment of a client, but also manages a computing capability and Information Technology (IT) availability. In the case that data is transmitted at a cloud end, the cloud computing data centre allocates a computing capability required by the transmitted data, and manages a background of the whole infrastructure. Operation maintenance for software and hardware is performed. A cloud platform is continuously debugged on a software level according to actual network usage, and normal operation allocation of a machine room environment and network resources is ensured on a hardware level. The cloud computing data centre implements the whole IT solution and the client can be totally endowed with sufficient computing capability (like water and electricity supply) without worrying about what is supposed to be done in the background.

When a tenant uses a service provided by the cloud computing data centre, security service is essential. However, since different tenants have different requirement on the security in the cloud computing data centre, and the same tenant may also use different resources for different purposes, in order to increase a utilization rate of security resources, different security service measures may be used. Therefore, a undiversified manner for providing a security service may not meet the requirements of different tenants.

Document WO 2013/138979 A1 discloses a hybrid multi-tenancy cloud platform. Document US 2013/036449 A1 discloses techniques for providing tenant based storage security and service level assurance in cloud storage environment. Document US 2011/219434 A1 discloses providing security services within a cloud computing environment. Document US 8528101 B1 discloses a cloud computing system that provides a web interface for the tenant to select his security preferences from it. These security preferences are physical protective measures to be applied by the cloud computing system whenever a physical breach in the cloud happens.

### Summary

The invention is defined in independent claims 1, 8 and 12. The embodiments of the disclosure provide a method and device for customizing security service, to solve the problem of incapability of an undiversified security service provision manner in meeting requirements of different tenants.

The embodiment of the disclosure provides a method for customizing security service, which may include that: a cloud computing data centre acquires at least one security service type selected by a tenant; and
the cloud computing data centre executes corresponding security service according to the at least one security service type selected by the tenant.

In an embodiment of the disclosure, the step that the cloud computing data centre acquires the at least one security service type selected by the tenant may include that:
the cloud computing data centre determines at least one security service type of a virtual machine tenanted by the tenant after receiving a resource list sent by the tenant, wherein the resource list contains the virtual machine requested to be tenanted by the tenant and a parameter of the virtual machine;
the cloud computing data centre provides at least one determined security service type suitable for the virtual machine for the tenant to select; and
the cloud computing data centre receives information about at least one security service type selected by the tenant.

In an embodiment of the disclosure, the step that the cloud computing data centre provides the at least one determined security service type suitable for the virtual machine for the tenant to select may specifically be implemented as follows:
the cloud computing data centre generates an optional security service type list according to the information about the at least one determined security service type suitable for the virtual machine, wherein the optional security service type list includes multiple entries and each entry corresponds to information about one optional security service type.

In an embodiment of the disclosure, the step that the cloud computing data centre receives the information about the at least one at least one security service type selected by the tenant may specifically be implemented as follows:
the cloud computing data centre receives a selected security service type list returned by the tenant, the selected security service type list containing at least one optional at least one security service type selected by the tenant.

In an embodiment of the disclosure, the step that the cloud computing data centre determines the at least one security service type of the virtual machine tenanted by the tenant after receiving the resource list sent by the tenant may specifically be implemented as follows:
the cloud computing data centre determines the at least one security service type suitable for the virtual machine as the optional at least one security service type according to the parameter of the virtual machine.

In an embodiment of the disclosure, the method may further include that:
a virtual machine security service type list of the tenant is configured in a security component of an access gateway, the virtual machine security service type list including the at least one security service type selected by the tenant.

In an embodiment of the disclosure, the step that the cloud computing data centre acquires the at least one security service type selected by the tenant may include that:
in the case that the tenant accesses the cloud computing data centre through the access gateway, the security component sends the virtual machine security service type list to the cloud computing data centre; and
the cloud computing data centre determines the at least one security service type selected by the tenant according to the virtual machine security service type list.

In an embodiment of the disclosure, the step that the cloud computing data centre acquires the at least one security service type selected by the tenant may include that:
the cloud computing data centre determines the at least one security service type of the virtual machine tenanted by the tenant after receiving a virtual machine application sent by the tenant, the virtual machine application containing the virtual machine requested to be tenanted by the tenant, the parameter of the virtual machine and the at least one security service type requested by the tenant;
the cloud computing data centre determines the optional at least one security service type of the tenant according to the parameter of the virtual machine; and
the cloud computing data centre determines the optional at least one security service type requested by the tenant as the at least one security service type selected by the tenant.

In an embodiment of the disclosure, after the step that the cloud computing data centre executes the corresponding security service according to the at least one security service type selected by the tenant, the method may further include that:
the cloud computing data centre feeds back a result of execution of the security service corresponding to the at least one at least one security service type selected by the tenant to the tenant.

The embodiment of the disclosure further provides another method for customizing security service, which may include that:
a tenant selects required at least one security service type; and
the tenant submits the selected at least one security service type to a cloud computing data centre, and makes a request for corresponding security service.

In an embodiment of the disclosure, the step that the tenant selects the required at least one security service type may include that:
the tenant sends a resource list to the cloud computing data centre, the resource list containing a virtual machine requested to be tenanted by the tenant and a parameter of the virtual machine;
the tenant receives at least one security service type returned by the cloud computing data centre; and
the tenant selects at least one optional security service type from an optional security service type list.

In an embodiment of the disclosure, the step that the tenant receives the at least one security service type returned by the cloud computing data centre may specifically be implemented as follows:
the tenant receives the optional security service type list returned by the cloud computing data centre, the optional security service type list including multiple entries and each entry corresponding to information about an optional security service type.

In an embodiment of the disclosure, the step that the tenant submits the selected at least one security service type to the cloud computing data centre and makes the request for the corresponding security service may include that:
the tenant generates a selected security service type list according to the information about the selected at least one optional security service type, the selected security service type list containing at least one optional security service type selected by the tenant; and
the tenant sends the selected security service type list to the cloud computing data centre.

In an embodiment of the disclosure, the step that the tenant selects the required at least one security service type may include that:
the tenant configures a virtual machine security service type list of the tenant in a security component of an access gateway, the virtual machine security service type list including the at least one security service type selected by the tenant.

In an embodiment of the disclosure, the step that the tenant submits the selected at least one security service type to the cloud computing data centre and makes the request for the corresponding security service may include that:
in the case that the tenant accesses the cloud computing data centre through the access gateway, the security component sends the virtual machine security service type list to the cloud computing data centre.

In an embodiment of the disclosure, the step that the tenant submits the selected at least one security service type to the cloud computing data centre and makes the request for the corresponding security service may include that:
the tenant sends a virtual machine application to the cloud computing data centre, the virtual machine application containing the virtual machine requested to be tenanted by the tenant, the parameter of the virtual machine and the at least one security service type requested by the tenant.

In an embodiment of the disclosure, after the step that the tenant submits the selected at least one security service type to the cloud computing data centre and makes the request for the corresponding security service, the method may further include that:
the tenant receives a result, fed back by the cloud computing data centre, of execution of the security service corresponding to the at least one security service type.

The embodiment of the disclosure further provides a device for customizing security service, which may include:
a service type acquisition component, configured to acquire at least one security service type selected by a tenant; and
a service execution component, configured to execute corresponding security service according to the at least one security service type selected by the tenant.

In an embodiment of the disclosure, the service type acquisition component may include:
a first request receiving unit, configured to determine at least one security service type of a virtual machine tenanted by the tenant after receiving a resource list sent by the tenant, the resource list containing the virtual machine requested to be tenanted by the tenant and a parameter of the virtual machine;
a first service provision unit, configured to provide at least one determined security service type suitable for the virtual machine for the tenant to select; and
a first selection receiving unit, configured to receive information about at least one security service type selected by the tenant.

In an embodiment of the disclosure, the service type acquisition component may further include:
a second selection receiving unit, configured to receive a virtual machine security service type list sent by a security component in the case that the tenant accesses a cloud computing data centre through an access gateway, and determine the at least one security service type selected by the tenant according to the virtual machine security service type list.

In an embodiment of the disclosure, the service type acquisition component may further include:
a third request receiving unit, configured to determine the at least one security service type of the virtual machine tenanted by the tenant after receiving a virtual machine application sent by the tenant, the virtual machine application containing the virtual machine requested to be tenanted by the tenant, the parameter of the virtual machine and at least one security service type requested by the tenant;
a third optional determination unit, configured to determine optional at least one security service type of the tenant according to the parameter of the virtual machine; and
a third selection unit, configured to determine the optional at least one security service type requested by the tenant as the at least one security service type selected by the tenant.

In an embodiment of the disclosure, the device may further include:
a result feedback component, configured to feed back a result of execution of the security service corresponding to the at least one security service type selected by the tenant to the tenant.

The embodiment of the disclosure provides the method and device for customizing security service, the cloud computing data centre acquires the at least one security service type selected by the tenant, and the cloud computing data centre executes the corresponding security service according to the at least one security service type selected by the tenant, so that the cloud data service may provide security service according to a requirement of the tenant, and the problem of incapability of the undiversified security service provision manner in meeting the requirements of different tenants is solved.

### Brief Description of the Drawings

Fig. 1 is a flowchart of a method for customizing a security service according to embodiment 1 of the disclosure;
Fig. 2 is a flowchart of another method for customizing the security service according to embodiment 1 of the disclosure;
Fig. 3 is a diagram of an optional security service list according to embodiment 2 of the disclosure;
Fig. 4 is a diagram of a selected security service type list according to embodiment 2 of the disclosure;
Fig. 5 is a diagram of a network architecture adopted in embodiment 3 of the disclosure;
Fig. 6 is a flowchart of a method for customizing the security service according to embodiment 4 of the disclosure;
Fig. 7 is a structure diagram of a device for customizing the security service according to embodiment 5 of the disclosure; and
Fig. 8 is a structure diagram of a service type acquisition component 701 in Fig. 7.

### Detailed Description of the Embodiments

Security service is rich in content, and includes basic security service: encryption, authentication, non-repudiation, integrity protection and the like; and application security service: online scanning, intrusion detection, security warning, content monitoring and the like. A tenant usually knows better a security requirement than a service provider in the case that selecting to tenant a resource of a cloud computing data centre.

In order to solve the problem, the embodiment of the disclosure provides a method for customizing the security service, security service may be maintained as a resource pool in a cloud computing data centre, and a tenant selects security service to be implemented for a resource.

The embodiment of the disclosure will be described below with reference to the drawings in detail. It is important to note that the embodiment in the disclosure and characteristics in the embodiment may be freely combined under the condition of no conflicts.

It is necessary for a cloud computing data centre to manage security resources in a centralized manner in the case that implementing pooling of physical resources, including the security resources. Centralized security resource management and operation maintenance may improve utilization efficiency and management efficiency of the resources of the cloud computing data centre. The security resources may be utilized to externally provide security service, which includes security detection service such as security scanning service, vulnerability scanning service, webpage scanning service, tamper-proofing scanning service, port scanning service, Trojan scanning service and traffic monitoring service, and security protection service such as security reinforcement service, password strengthening service, Trojan embedding prevention service, antivirus service, data stream cleaning service and firewall service.

Obtaining a required resource in an easy-to-extend requirement-based manner through a network is one of characteristics of cloud computing. In the cloud computing data centre, security and reliability are the most concerns of a tenant. Therefore, various security protection measures of the cloud computing data centre are extremely important. At present, a security service manner of the cloud computing data centre runs in background to provide security guarantee for the cloud computing data centre as default, and the cloud computing data centre manages and allocates the security service in a unified manner. All conventional security service strategies are based on a unified strategy, and security service for resource acquisition of tenants is substantially the same. Tenants may not participate in resource security service provision service.

In the cloud computing data centre, for different service types, tenants may have different security requirements. For the same service type, different tenants may also have different security requirements. Moreover, from the angle of the cloud computing data centre, providing unified security protection for different resources of different tenants may not accurately meet requirements of the tenants, and may also not efficiently configure security resources. Therefore, the cloud computing data centre may only be responsible for maintenance of the security resources and execution and feedback of the security service to improve participation of the tenants and improve tenant experiences of the tenants in the security service. Types and strength of the security service are selected by the tenants, and the tenants determine security protection types for tenanted resources.

For example, the cloud computing data centre maintains security resources of system configuration checking, system vulnerability checking, system security reinforcement, system patch reinforcement and the like; and before a tenant selects security service to be executed, the cloud computing data centre does not execute the security service, and after the tenant customizes security service, the cloud computing data centre is responsible for execution of the security service and feedback of an execution result to the tenant.

According to the method for customizing security service provided by the embodiment of the disclosure, a tenant selects to-be-executed at least one security service type, and the cloud computing data centre determines at least one security service type available to a virtual machine after the tenant submits a virtual machine tenanting requirement, provides the at least one security service type for the tenant to select, and executes security protection for the virtual machine of the tenant according to the at least one security service type selected by the tenant.

Embodiment 1 of the disclosure will be described below with reference to the drawings.

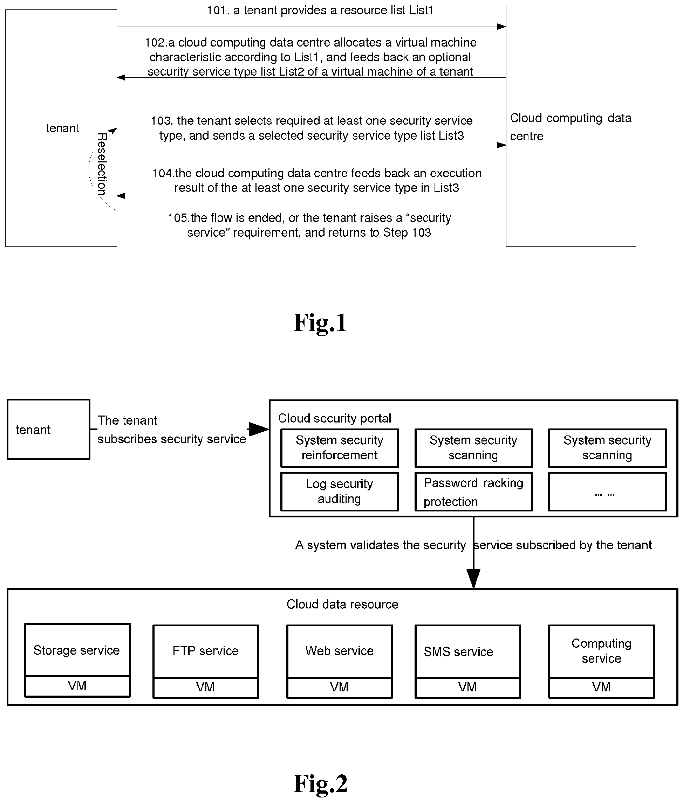

The embodiment of the disclosure provides a method for customizing security service, and as shown in Fig. 1, a flow of providing security service for a tenant by virtue of the method includes:
Step 101: a tenant submits a resource list List1 to a cloud computing data centre, including a parameter (such as a Central Processing Unit (CPU), a memory and a DISK) requirement of a virtual machine, and clearly describes an operating system to be preinstalled in the virtual machine and a service type;
Step 102: the cloud computing data centre performs analysis to comb out at least one security service type suitable for the virtual machine as optional at least one security service type according to List1 and an existing strategy, makes an optional security service type list List2 and feeds back List2 to the tenant, wherein
for example, the security strategy may be specifying a system configuration checking content according to a type of the operating system, and different system configuration checking is performed on different systems;
step 103: the tenant selects at least one optional security service type from List2 to form a selected security service type list List3, and sends List3 to the cloud computing data centre,
wherein List3 is a subset of List2;
Step 104: the cloud computing data centre performs security detection and protection on the virtual machine according to List3, and feeds back a security result to the tenant; and
Step 105: the tenant may select whether to reselect security service or not according to the security result, and returns to Step 103 if it is necessary to reselect the security service.

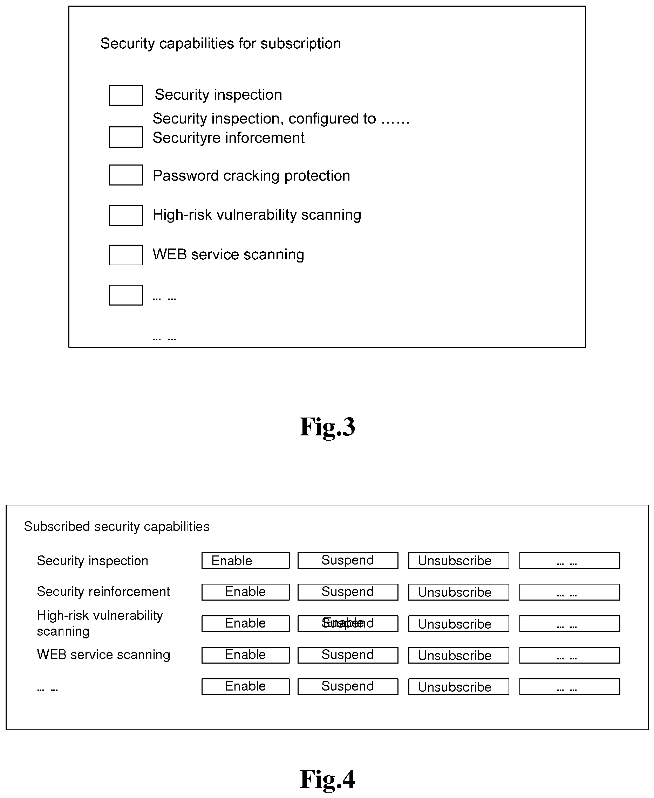

Specific implementation of the flow shown in Fig. 1 is shown in Fig. 2, the cloud computing data centre provides a security service list for the tenant through a web portal or a client, and the tenant may select a required security service type from the security service list, a specific flow including:
Step 201: the tenant logs in the web portal or client of the cloud computing data centre, submits the virtual machine resource list List1 in the web portal or the client, and sends List1 to the cloud computing data centre;
Step 202: the cloud computing data centre returns the optional security service type list List2 to the tenant according to List1, as shown in Fig. 3, and the tenant may select required at least one security capabilitie (security service type) through an interface shown in Fig. 3;
Step 203: the tenant selects the at least one security service type to form the selected security service type list List3, as shown in Fig. 4, specific implementation of List3 being: a subscribed security capability list, and sends List3 to the cloud computing data centre;
Step 204: the cloud computing data centre executes security detection and protection according to List3, and feeds back the security result to the tenant; and
Step 205: the tenant checks the security result, and determines whether to reselect the at least one security service type or not.

Embodiment 2 of the disclosure will be described below with reference to the drawings.

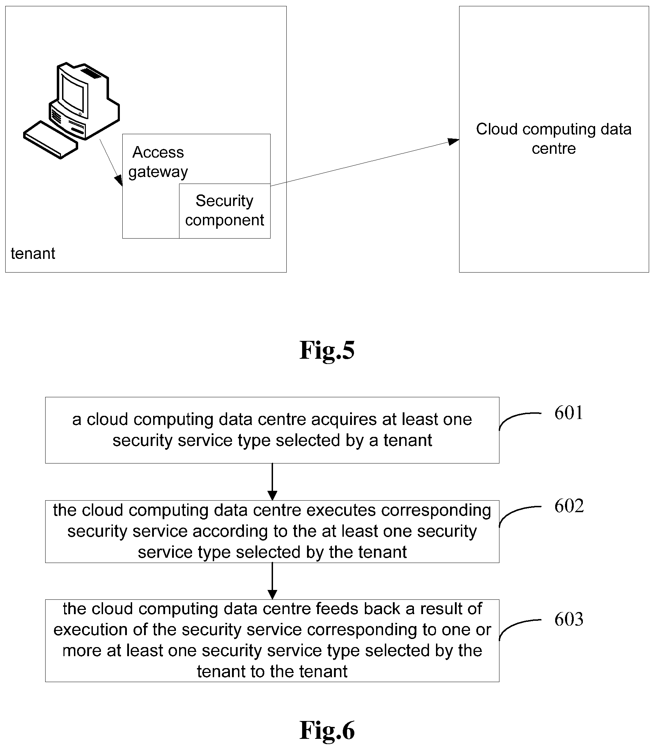

The embodiment of the disclosure provides a method for customizing security service, security service selection is implemented through a security component in an access gateway provided by a cloud computing data centre, and network architecture is shown in Fig. 5.

The security component is responsible for interacting with the cloud computing data centre and sending and receiving security service type information. For example, at least one security service type is set in the security component of the access gateway in advance. In the case that a tenant uses a virtual machine resource through the security component, the security component may transmit the at least one security service type to the cloud computing data centre, and the cloud computing data centre performs security detection and protection on the virtual machine according to the at least one security service type of the security component.

A function of the security component may also be extended, and for example, the security component may judge a condition of the access gateway of the tenant according to a predefined strategy, to regulate the at least one security service type. For example, in the case that the access gateway discovers that an access environment of the tenant is a public network, the security component may add a security service type corresponding to the public network, or increase execution strength of the existing service types of the security component.

A virtual machine security service type list of the tenant is configured in the security component of the access gateway, and the virtual machine security service type list includes the at least one security service type selected by the tenant.

The virtual machine security service type list may be set by the cloud computing data centre or a user with a right such as the tenant in a remote connection manner or another manner.

Description about a flow:
1: in the case that the tenant accesses a virtual machine system of the cloud computing data centre through the access gateway, the security component in the access gateway sends the virtual machine security service type list to the cloud computing data centre;
2: the cloud computing data centre performs security detection and protection on the virtual machine according to the virtual machine security service type list, and feeds back an execution result to the tenant; and
3: the tenant may judge whether to regulate the at least one security service type or not according to the execution result.

Embodiment 3 of the disclosure will be described below with reference to the drawings.

A tenant sends expected at least one security service type and virtual machine resources together with a service requirement to a cloud computing data centre in the case that sending a virtual machine application, and the cloud computing data centre judges whether to execute these security service types or not as well as execution strength and the like according to a strategy, and feeds back the executed at least one security service type and an execution result to the tenant.

Description about a flow:
1: the tenant submits the virtual machine application to the cloud computing data centre, including a virtual machine resource list List1 with contents the same as those in embodiment 1, and a list List2 of the security service type requested by the tenant;
2: the cloud computing data centre screens a list List3 of information such as the security service type available for the virtual machine and execution strength from List2 according to a security strategy and List1, the cloud computing data centre executes the screened security service type List3, and feeds back a security execution result and List3 to the tenant, and the cloud computing data centre may optionally send List4 of the security service type suggested to be executed for the virtual machine by the tenant to the tenant at the same time; and
3: the tenant checks List3 and checks the security execution result, or checks List4 and reinitiates a security service type selection application.

Embodiment 4 of the disclosure will be described below with reference to the drawings.

The embodiment of the disclosure provides a method for customizing the security service, and as shown in Fig. 6, a flow of providing security service for a tenant by a cloud computing data centre by virtue of the method includes:
Step 601: the cloud computing data centre acquires at least one security service type selected by the tenant.

In the step, the tenant selects the required at least one security service type, and submits the selected at least one security service type to the cloud computing data centre to request for corresponding security service; and then the cloud computing data centre acquires the at least one security service type selected by the tenant.

In the step, there are specifically three implementation manners, which will be respectively described below.
Manner 1:
   the tenant sends a resource list to the cloud computing data centre, and the cloud computing data centre determines at least one security service type of a virtual machine tenanted by the tenant after receiving the resource list sent by the tenant, the resource list containing the virtual machine requested to be tenanted by the tenant and a parameter of the virtual machine;
   specifically, the cloud computing data centre determines at least one security service type suitable for the virtual machine as optional at least one security service type according to the parameter of the virtual machine;
   2: the cloud computing data centre generates an optional security service type list according to information about the determined at least one security service type suitable for the virtual machine, the optional security service type list including multiple entries and each entry corresponding to information about an optional security service type;
   the tenant selects one or more optional security service types from the optional list security service type list, and generates a selected security service type list according to the information about the selected optional security service types, the type list selected security service type list containing the at least one optional security service type selected by the tenant, and the tenant sends the selected security service type list to the cloud computing data centre; and
   3: the cloud computing data centre receives the selected security service type list returned by the tenant, the selected security service type list containing the at least one optional security service type selected by the tenant.
Manner 2:
   1: the tenant configures a virtual machine security service type list of the tenant in a security component of an access gateway, the virtual machine security service type list including the at least one security service type selected by the tenant;
   2: in the case that the tenant accesses the cloud computing data centre through the access gateway, the security component sends the security service type list of the virtual machine type list to the cloud computing data centre; and
   3: the cloud computing data centre determines the at least one security service type selected by the tenant according to the virtual machine security service type list.
Manner 3:
   1: the tenant sends a virtual machine application to the cloud computing data centre, the virtual machine application containing the virtual machine requested to be tenanted by the tenant, the parameter of the virtual machine and the at least one security service type requested by the tenant; the cloud computing data centre determines the at least one security service type of the virtual machine tenanted by the tenant after receiving the virtual machine application sent by the tenant;
   2: the cloud computing data centre determines the optional at least one security service type of the tenant according to the parameter of the virtual machine; and
   3: the cloud computing data centre determines the optional at least one security service type requested by the tenant as the at least one security service type selected by the tenant.

Step 602: the cloud computing data centre executes corresponding security service according to the at least one security service type selected by the tenant.

After finishing determining the at least one security service type selected by the tenant in Step 601, the cloud computing data centre may execute the security service corresponding to the at least one security service type, and obtains execution result data.

Step 603: the cloud computing data centre feeds back a result of execution o the security service corresponding to the at least one security service type selected by the tenant to the tenant.

Embodiment 5 of the disclosure will be described below with reference to the drawings.

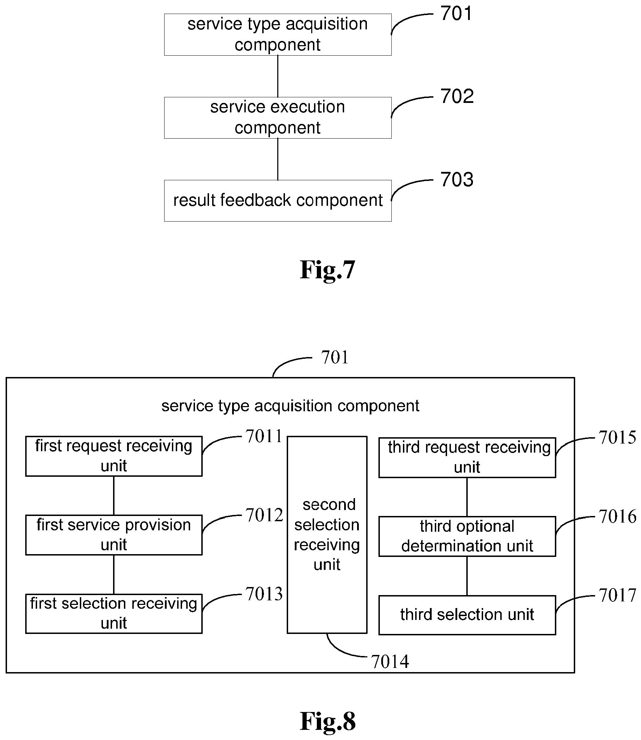

The embodiment of the disclosure provides a device for customizing security service, which, as shown in Fig. 7, structurally includes:
a service type acquisition component 701, configured to acquire at least one security service type selected by a tenant; and
a service execution component 702, configured to execute corresponding security service according to the at least one security service type selected by the tenant.

In an embodiment of the disclosure, the service type acquisition component 701, as shown in Fig. 8, structurally includes:
a first request receiving unit 7011, configured to determine at least one security service type of a virtual machine tenanted by the tenant after receiving a resource list sent by the tenant, the resource list containing the virtual machine requested to be tenanted by the tenant and a parameter of the virtual machine;
a first service provision unit 7012, configured to provide one or more determined security service types suitable for the virtual machine for the tenant to select; and
a first selection receiving unit 7013, configured to receive information about at least one security service type selected by the tenant.

In an embodiment of the disclosure, the service type acquisition component 701 further includes:
a second selection receiving unit 7014, configured to receive a virtual machine security service type list sent by a security component in the case that the tenant accesses a cloud computing data centre through an access gateway, and determine the at least one security service type selected by the tenant according to the virtual machine security service type list.

In an embodiment of the disclosure, the service type acquisition component 701 further includes:
a third request receiving unit 7015, configured to determine the at least one security service type of the virtual machine tenanted by the tenant after receiving a virtual machine application sent by the tenant, the virtual machine application containing the virtual machine requested to be tenanted by the tenant, the parameter of the virtual machine and one or more security service types requested by the tenant;
a third optional determination unit 7016, configured to determine optional at least one security service type of the tenant according to the parameter of the virtual machine; and
a third selection unit 7017, configured to determine the optional at least one security service type requested by the tenant as the at least one security service type selected by the tenant.

In an embodiment of the disclosure, the device further includes:
a result feedback component 703, configured to feed back a result of execution of the security service corresponding to the at least one security service type selected by the tenant to the tenant.

The device for customizing security service may be integrated in the cloud computing data centre, and the cloud computing data centre finishes the corresponding functions.

The embodiment of the disclosure provides the method for customizing security service and device, the cloud computing data centre acquires the at least one security service type selected by the tenant, and the cloud computing data centre executes the corresponding security service according to the at least one security service type selected by the tenant, so that the cloud data service may provide security service according to a requirement of the tenant, and the problem of incapability of the undiversified security service provision manner in meeting the requirements of different tenants is solved.

Those skilled in the art may understand that all or part of steps of the embodiment may be implemented by virtue of a computer program, the computer program may be stored in a computer-readable storage medium, and the computer program is executed on a corresponding hardware platform (such as a system, equipment, a device and an apparatus), including one or combination of the steps of the method embodiments during execution.

Optionally, all or part of the steps of the embodiment may also be implemented by an integrated circuit, these steps may form integrated circuit components respectively, or multiple components or steps therein may form a single integrated circuit component for implementation. Therefore, the disclosure is not limited by any specific hardware and software combination.

Each device/function component/function unit in the embodiment may be implemented by a universal computing device, and they may be concentrated in a single computing device, and may also be distributed on a network formed by multiple computing devices.

Each device/function component/function unit in the embodiment may be stored in a computer-readable storage medium in the case that being implemented in form of software function component or sold or used as an independent product. The abovementioned computer-readable storage medium may be a read-only memory, a magnetic disk, a compact disc or the like.

Any variation or replacement apparent to those skilled in the art within the technical scope of the disclosure shall fall within the scope of protection of the disclosure. Therefore, the scope of protection of the disclosure shall be subject to the scope of protection of the claims.

### Industrial Applicability

The embodiments of the disclosure provide a method and device for customizing the security service, a cloud computing data centre acquires at least one security service type selected by a tenant, and the cloud computing data centre executes corresponding security service according to the at least one security service type selected by the tenant, so that the cloud data service may provide security service according to a requirement of the tenant, and the problem of incapability of an undiversified security service provision manner in meeting requirements of different tenants is solved.

## Claims

1. A method for customizing a security service, comprising:
acquiring, by a cloud computing data centre, at least one security service type selected by a tenant, wherein the security service type comprises at least one of the following: security detection service, security protection service, and the security detection service comprises at least one of the following: security scanning service, vulnerability scanning service, webpage scanning service, tamper-proofing scanning service, port scanning service, Trojan scanning service and traffic monitoring service; and the security protection service comprises at least one of the following: password strengthening service, Trojan embedding prevention service, antivirus service, data stream cleaning service and firewall service; and
executing, by the cloud computing data centre, at least one security service corresponding to the at least one security service type according to the at least one security service type selected by the tenant;
wherein acquiring, by the cloud computing data centre, the at least one security service type selected by the tenant comprises:
after receiving a resource list sent by the tenant, determining, by the cloud computing data centre, at least one security service type of a virtual machine tenanted by the tenant, wherein the resource list contains the virtual machine requested to be tenanted by the tenant and a parameter of the virtual machine;
providing, by the cloud computing data centre, at least one determined security service type suitable for the virtual machine for the tenant to select according to the parameter of the virtual machine; and
receiving, by the cloud computing data centre, information about one or more security service types selected by the tenant.

2. The method for customizing the security service according to claim 1, wherein providing, by the cloud computing data centre, the one or more determined security service types suitable for the virtual machine for the tenant to select comprises:
generating, by the cloud computing data centre, an optional security service type list according to the information about the determined security service types suitable for the virtual machine, wherein the optional security service type list comprises multiple entries and each entry corresponds to information about one optional security service type;
wherein receiving, by the cloud computing data centre, the information about the one or more security service types selected by the tenant comprises:
receiving, by the cloud computing data centre, a selected security service type list returned by the tenant, wherein the selected security service type list contains one or more optional security service types selected by the tenant.

3. The method for customizing the security service according to claim 1, wherein determining, by the cloud computing data centre, the at least one security service type of the virtual machine tenanted by the tenant after receiving the resource list sent by the tenant comprises:
determining, by the cloud computing data centre, the at least one security service type suitable for the virtual machine as the optional security service type according to the parameter of the virtual machine.

4. The method for customizing the security service according to claim 1, further comprising:
configuring a virtual machine security service type list of the tenant in a security component of an access gateway, wherein the virtual machine security service type list comprising the at least one security service type selected by the tenant.

5. The method for customizing the security service according to claim 2, wherein acquiring, by the cloud computing data centre, the at least one security service type selected by the tenant comprises:
in a case that the tenant accesses the cloud computing data centre through an access gateway, sending, by the security component, the virtual machine security service type list to the cloud computing data centre; and
determining, by the cloud computing data centre according to the virtual machine security service type list of the at least one security service type selected by the tenant.

6. The method for customizing the security service according to claim 1, wherein acquiring, by the cloud computing data centre, the at least one security service type selected by the tenant comprises:
after receiving an virtual machine application sent by the tenant, determining, by the cloud computing data centre, at least one security service type of a virtual machine tenanted by the tenant, wherein the virtual machine application carries the virtual machine requested to be tenanted by the tenant, a parameter of the virtual machine and the at least one security service type requested by the tenant;
determining, by the cloud computing data centre, the at least one optional security service type of the tenant according to the parameter of the virtual machine; and
determining, by the cloud computing data centre, at least one optional security service type requested by the tenant as the at least one security service type selected by the tenant.

7. The method for customizing the security service according to claim 1, after executing, by the cloud computing data centre, the corresponding security service according to the at least one security service type selected by the tenant, further comprising:
feeding back, by the cloud computing data centre, to the tenant a result of execution of the security service corresponding to at least one security service type selected by the tenant.

8. A method for customizing a security service, comprising:
selecting, by a tenant, at least one required security service type; and
submitting, by the tenant, the selected at least one security service type to a cloud computing data centre, to request for at least one security service corresponding to the at least one security service type;
wherein selecting, by the tenant, the required at least one security service type comprises:
sending, by the tenant, a resource list to the cloud computing data centre, the resource list containing a virtual machine requested to be tenanted by the tenant and a parameter of the virtual machine;
receiving, by the tenant, at least one security service type returned by the cloud computing data center according to the sent parameter of the virtual machine, wherein the security service type comprises at least one of the following: security detection service, security protection service, and the security detection service comprises at least one of the following: security scanning service, vulnerability scanning service, webpage scanning service, tamper-proofing scanning service, port scanning service, Trojan scanning service and traffic monitoring service; and the security protection service comprises at least one of the following: password strengthening service, Trojan embedding prevention service, antivirus service, data stream cleaning service and firewall service; and
selecting, by the tenant, at least one optional security service type from an optional security service type list;
wherein receiving, by the tenant, the at least one security service type returned by the cloud computing data centre is implemented as follows:
receiving, by the tenant, the optional security service type list returned by the cloud computing data centre, the optional security service type list comprising multiple entries and each entry corresponding to information about an optional security service type.

9. The method for customizing the security service according to claim 8, wherein submitting, by the tenant, the selected at least one security service type to the cloud computing data centre and making the request for the corresponding security service comprises:
generating, by the tenant, a selected security service type list according to the information about the selected optional at least one security service type, the selected security service type list containing at least one optional security service type selected by the tenant; and
sending, by the tenant, the selected security service type list to the cloud computing data centre.

10. The method for customizing the security service according to claim 8, wherein selecting, by the tenant, the required at least one security service type comprises:
configuring, by the tenant, a virtual machine security service type list of the tenant in a security component of an access gateway, the virtual machine security service type list comprising the at least one security service type selected by the tenant;
wherein submitting, by the tenant, the selected at least one security service type to the cloud computing data centre and making the request for the corresponding security service comprises:
in the case that the tenant accesses the cloud computing data centre through the access gateway, sending, by the security component, the virtual machine security service type list to the cloud computing data centre.

11. The method for customizing the security service according to claim 8, wherein submitting, by the tenant, the selected at least one security service type to the cloud computing data centre and making the request for the corresponding security service comprises:
sending, by the tenant, a virtual machine application to the cloud computing data centre, the virtual machine application carrying the virtual machine requested to be tenanted by the tenant, the parameter of the virtual machine and the at least one security service type requested by the tenant.

12. A device for customizing a security service, comprising:
a service type acquisition component, configured to acquire at least one security service type selected by a tenant, wherein the security service type comprises at least one of the following: security detection service, security protection service, and the security detection service comprises at least one of the following: security scanning service, vulnerability scanning service, webpage scanning service, tamper-proofing scanning service, port scanning service, Trojan scanning service and traffic monitoring service; and the security protection service comprises at least one of the following: password strengthening service, Trojan embedding prevention service, antivirus service, data stream cleaning service and firewall service; and
a service execution component, configured to execute corresponding security service according to the at least one security service type selected by the tenant;
wherein the service type acquisition component comprises:
a first request receiving unit, configured to determine at least one security service type of a virtual machine tenanted by the tenant after receiving a resource list sent by the tenant, wherein the resource list contains the virtual machine requested to be tenanted by the tenant and a parameter of the virtual machine;
a first service provision unit, configured to provide at least one determined security service type suitable for the virtual machine for the tenant to select according to the parameter of the virtual machine; and
a first selection receiving unit, configured to receive information about at least one security service type selected by the tenant;
wherein the service type acquisition component further comprises:
a second selection receiving unit, configured to receive a virtual machine security service type list sent by a security component in the case that the tenant accesses a cloud computing data centre through an access gateway, and determine the at least one security service type selected by the tenant according to the virtual machine security service type list.

13. The device for customizing the security service according to claim 12, wherein the service type acquisition component further comprises:
a third request receiving unit, configured to determine the at least one security service type of the virtual machine tenanted by the tenant after receiving a virtual machine application sent by the tenant, the virtual machine application containing the virtual machine requested to be tenanted by the tenant, the parameter of the virtual machine and at least one security service type requested by the tenant;
a third optional determination unit, configured to determine optional at least one security service type of the tenant according to the parameter of the virtual machine; and
a third selection unit, configured to determine the optional at least one security service type requested by the tenant as the at least one security service type selected by the tenant.

## Patentansprüche

1. Verfahren zum Anpassen eines Sicherheitsservices, umfassend:
Erfassen, durch ein Cloud-Computing-Rechenzentrum, mindestens eines durch einen Mieter ausgewählten Sicherheitsservicetyps, wobei der Sicherheitsservicetyp mindestens einen der folgenden umfasst: Sicherheitsdetektionsservice, Sicherheitsschutzservice, und der Sicherheitsdetektionsservice mindestens einen der folgenden umfasst: Sicherheits-Scanservice, Schwachstellen-Scanservice, Webseiten-Scanservice, Manipulationsschutz-Scanservice, Port-Scanservice, Trojaner-Scanservice und Datenverkehrsüberwachungsservice; und der Sicherheitsschutzservice mindestens einen der folgenden umfasst: Passwortverstärkungsservice, Trojaner-Einbettungspräventionsservice, Antiviren-Service, Datenstrombereinigungsservice und Firewall-Service; und
Ausführen, durch das Cloud-Computing-Rechenzentrum gemäß dem mindestens einen durch den Mieter ausgewählten Sicherheitsservicetyp, mindestens eines Sicherheitsservices, der dem mindestens einen Sicherheitsservicetyp entspricht;
wobei das Erfassen, durch das Cloud-Computing-Rechenzentrum, des mindestens einen durch den Mieter ausgewählten Sicherheitsservicetyps umfasst:
nach dem Empfangen einer durch den Mieter gesendeten Ressourcenliste Ermitteln, durch das Cloud-Computing-Rechenzentrum, mindestens eines Sicherheitsservicetyps einer durch den Mieter gemieteten virtuellen Maschine, wobei die Ressourcenliste die durch den Mieter angeforderte virtuelle Maschine und einen Parameter der virtuellen Maschine enthält;
Bereitstellen, durch das Cloud-Computing-Rechenzentrum, mindestens eines ermittelten für die virtuelle Maschine geeigneten Sicherheitsservicetyps für den Mieter zum Auswählen je nach dem Parameter der virtuellen Maschine; und
Empfangen, durch das Cloud-Computing-Rechenzentrum, von Informationen über einen oder mehrere durch den Mieter ausgewählte Sicherheitsservicetypen.

2. Verfahren zum Anpassen des Sicherheitsservices nach Anspruch 1, wobei das Bereitstellen, durch das Cloud-Computing-Rechenzentrum, des einen oder der mehreren ermittelten für die virtuelle Maschine geeigneten Sicherheitsservicetypen für den Mieter zum Auswählen umfasst:
Erzeugen, durch das Cloud-Computing-Rechenzentrum, einer Liste optionaler Sicherheitsservicetypen entsprechend den Informationen über die ermittelten für die virtuelle Maschine geeigneten Sicherheitsservicetypen, wobei die Liste optionaler Sicherheitsservicetypen mehrere Einträge umfasst und jeder Eintrag Informationen über einen optionalen Sicherheitsservicetyp entspricht;
wobei das Empfangen, durch das Cloud-Computing-Rechenzentrum, der Informationen über den einen oder die mehreren durch den Mieter ausgewählten Sicherheitsservicetypen umfasst:
Empfangen, durch das Cloud-Computing-Rechenzentrum, einer Liste ausgewählter Sicherheitsservicetypen, die durch den Mieter zurückgegeben wurde, wobei die Liste ausgewählter Sicherheitsservicetypen einen oder mehrere optionale Sicherheitsservicetypen enthält, die durch den Mieter ausgewählt wurden.

3. Verfahren zum Anpassen des Sicherheitsservices nach Anspruch 1, wobei das Ermitteln, durch das Cloud-Computing-Rechenzentrum, des mindestens einen Sicherheitsservicetyps der durch den Mieter gemieteten virtuellen Maschine nach dem Empfangen der durch den Mieter gesendeten Ressourcenliste umfasst:
Ermitteln, durch das Cloud-Computing-Rechenzentrum, des mindestens einen für die virtuelle Maschine geeigneten Sicherheitsservicetyps als optionalen Sicherheitsservicetyp gemäß dem Parameter der virtuellen Maschine.

4. Verfahren zum Anpassen des Sicherheitsservices nach Anspruch 1, ferner umfassend:
Konfigurieren einer Sicherheitsservicetypliste der virtuellen Maschine des Mieters in einer Sicherheitskomponente eines Zugriffsgateways, wobei die Sicherheitsservicetypliste der virtuellen Maschine den mindestens einen durch den Mieter ausgewählten Sicherheitsservicetyp umfasst.

5. Verfahren zum Anpassen des Sicherheitsservices nach Anspruch 2, wobei das Erfassen des mindestens einen durch den Mieter ausgewählten Sicherheitsservicetyps durch das Cloud-Computing-Rechenzentrum umfasst:
in einem Fall, in dem der Mieter über ein Zugriffsgateway auf das Cloud-Computing-Rechenzentrum zugreift, Senden, durch die Sicherheitskomponente, der Sicherheitsservicetypliste der virtuellen Maschine an das Cloud-Computing-Rechenzentrum; und
Ermitteln, durch das Cloud-Computing-Rechenzentrum gemäß der Sicherheitsservicetypliste der virtuellen Maschine, des mindestens einen durch den Mieter ausgewählten Sicherheitsservicetyps.

6. Verfahren zum Anpassen des Sicherheitsservices nach Anspruch 1, wobei das Erfassen des mindestens einen durch den Mieter ausgewählten Sicherheitsservicetyps durch das Cloud-Computing-Rechenzentrum umfasst:
nach dem Empfangen einer durch den Mieter gesendeten Anwendung einer virtuellen Maschine Ermitteln, durch das Cloud-Computing-Rechenzentrum, mindestens eines Sicherheitsservicetyps einer durch den Mieter gemieteten virtuellen Maschine, wobei die Anwendung der virtuellen Maschine die durch den Mieter zum Mieten angeforderte virtuelle Maschine, einen Parameter der virtuellen Maschine und den mindestens einen durch den Mieter angeforderten Sicherheitsservicetyp transportiert;
Ermitteln, durch das Cloud-Computing-Rechenzentrum, des mindestens einen optionalen Sicherheitsservicetyps des Mieters gemäß dem Parameter der virtuellen Maschine; und
Ermitteln, durch das Cloud-Computing-Rechenzentrum, mindestens eines optionalen Sicherheitsservicetyps, der durch den Mieter als der mindestens eine durch den Mieter ausgewählte Sicherheitsservicetyp angefordert wurde.

7. Verfahren zum Anpassen des Sicherheitsservices nach Anspruch 1, nach dem Ausführen, durch das Cloud-Computing-Rechenzentrum, des entsprechenden Sicherheitsservices gemäß dem mindestens einen durch den Mieter ausgewählten Sicherheitsservicetyp ferner umfassend:
Zurückgeben, durch das Cloud-Computing-Rechenzentrum, eines Ergebnisses der Ausführung des Sicherheitsservices, der mindestens einem durch den Mieter ausgewählten Sicherheitsservicetyp entspricht, an den Mieter.

8. Verfahren zum Anpassen eines Sicherheitsservices, umfassend:
Auswählen, durch einen Mieter, mindestens eines erforderlichen Sicherheitsservicetyps; und
Übermitteln, durch den Mieter, des ausgewählten mindestens einen Sicherheitsservicetyps an ein Cloud-Computing-Rechenzentrum, um mindestens einen Sicherheitsservice anzufordern, der dem mindestens einen Sicherheitsservicetyp entspricht;
wobei das Auswählen, durch den Mieter, des erforderlichen mindestens einen Sicherheitsservicetyps umfasst:
Senden, durch den Mieter, einer Ressourcenliste an das Cloud-Computing-Rechenzentrum, wobei die Ressourcenliste eine virtuelle Maschine enthält, die durch den Mieter gemietet werden soll, sowie einen Parameter der virtuellen Maschine;
Empfangen, durch den Mieter, mindestens eines Sicherheitsservicetyps, der durch das Cloud-Computing-Rechenzentrum gemäß dem gesendeten Parameter der virtuellen Maschine zurückgegeben wurde, wobei der Sicherheitsservicetyp mindestens einen der folgenden umfasst: Sicherheitsdetektionsservice, Sicherheitsschutzservice, und der Sicherheitsdetektionsservice mindestens einen der folgenden umfasst: Sicherheits-Scanservice, Schwachstellen-Scanservice, Webseiten-Scanservice, Manipulationsschutz-Scanservice, Port-Scanservice, Trojaner-Scanservice und Datenverkehrsüberwachungsservice; und der Sicherheitsschutzservice mindestens einen der folgenden umfasst: Passwortverstärkungsservice, Trojaner-Einbettungspräventionsservice, Antiviren-Service, Datenstrombereinigungsservice und Firewall-Service; und
Auswählen, durch den Mieter, mindestens eines optionalen Sicherheitsservicetyps aus einer Liste optionaler Sicherheitsservicetypen;
wobei das Empfangen, durch den Mieter, des mindestens einen durch das Cloud-Computing-Rechenzentrum zurückgegebenen Sicherheitsservicetyps wie folgt implementiert ist:
Empfangen, durch den Mieter, der Liste optionaler Sicherheitsservicetypen, die durch das Cloud-Computing-Rechenzentrum zurückgegeben wurde, wobei die Liste optionaler Sicherheitsservicetypen mehrere Einträge umfasst und jeder Eintrag Informationen über einen optionalen Sicherheitsservicetyp entspricht.

9. Verfahren zum Anpassen des Sicherheitsservices nach Anspruch 8, wobei das Übermitteln, durch den Mieter, des ausgewählten mindestens einen Sicherheitsservicetyps an das Cloud-Computing-Rechenzentrum und das Anfordern des entsprechenden Sicherheitsservices umfasst:
Erzeugen, durch den Mieter, einer Liste ausgewählter Sicherheitsservicetypen gemäß den Informationen über den ausgewählten optionalen mindestens einen Sicherheitsservicetyp, wobei die Liste ausgewählter Sicherheitsservicetypen mindestens einen durch den Mieter ausgewählten optionalen Sicherheitsservicetyp enthält; und
Senden, durch den Mieter, der Liste ausgewählter Sicherheitsservicetypen an das Cloud-Computing-Rechenzentrum.

10. Verfahren zum Anpassen des Sicherheitsservices nach Anspruch 8, wobei das Auswählen, durch den Mieter, des erforderlichen mindestens einen Sicherheitsservicetyps umfasst:
Konfigurieren, durch den Mieter, einer Sicherheitsservicetypliste der virtuellen Maschine des Mieters in einer Sicherheitskomponente eines Zugriffsgateways, wobei die Sicherheitsservicetypliste der virtuellen Maschine den mindestens einen durch den Mieter ausgewählten Sicherheitsservicetyp umfasst;
wobei das Übermitteln, durch den Mieter, des ausgewählten mindestens einen Sicherheitsservicetyps an das Cloud-Computing-Rechenzentrum und das Anfordern des entsprechenden Sicherheitsservices umfasst:
in dem Fall, in dem der Mieter über das Zugriffsgateway auf das Cloud-Computing-Rechenzentrum zugreift, Senden, durch die Sicherheitskomponente, der Sicherheitsservicetypliste der virtuellen Maschine an das Cloud-Computing-Rechenzentrum.

11. Verfahren zum Anpassen des Sicherheitsservices nach Anspruch 8, wobei das Übermitteln, durch den Mieter, des ausgewählten mindestens einen Sicherheitsservicetyps an das Cloud-Computing-Rechenzentrum und das Anfordern des entsprechenden Sicherheitsservices umfasst:
Senden, durch den Mieter, einer Anwendung einer virtuellen Maschine an das Cloud-Computing-Rechenzentrum, wobei die Anwendung der virtuellen Maschine die durch den Mieter angeforderte virtuelle Maschine, den Parameter der virtuellen Maschine und den mindestens einen durch den Mieter angeforderten Sicherheitsservicetyp transportiert.

12. Vorrichtung zum Anpassen eines Sicherheitsservices, umfassend:
eine Servicetyperfassungskomponente, die konfiguriert ist, mindestens einen durch einen Mieter ausgewählten Sicherheitsservicetyp zu erfassen, wobei der Sicherheitsservicetyp mindestens einen der folgenden umfasst: Sicherheitsdetektionsservice, Sicherheitsschutzservice, und der Sicherheitsdetektionsservice mindestens einen der folgenden umfasst: Sicherheits-Scanservice, Schwachstellen-Scanservice, Webseiten-Scanservice, Manipulationsschutz-Scanservice, Port-Scanservice, Trojaner-Scanservice und Datenverkehrsüberwachungsservice; und der Sicherheitsschutzservice mindestens einen der folgenden umfasst: Passwortverstärkungsservice, Trojaner-Einbettungspräventionsservice, Antiviren-Service, Datenstrombereinigungsservice und Firewall-Service; und
eine Serviceausführungskomponente, die konfiguriert ist, einen entsprechenden Sicherheitsservice gemäß dem mindestens einen durch den Mieter ausgewählten Sicherheitsservicetyp auszuführen;
wobei die Servicetyperfassungskomponente umfasst:
eine erste Anforderungsempfangseinheit, die konfiguriert ist, mindestens einen Sicherheitsservicetyp einer durch den Mieter gemieteten virtuellen Maschine zu ermitteln, nachdem sie eine durch den Mieter gesendete Ressourcenliste empfangen hat, wobei die Ressourcenliste die durch den Mieter angeforderte virtuelle Maschine, die gemietet werden soll, und einen Parameter der virtuellen Maschine enthält;
eine erste Servicebereitstellungseinheit, die konfiguriert ist, mindestens einen ermittelten für die virtuelle Maschine geeigneten Sicherheitsservicetyp für den Mieter zum Auswählen je nach dem Parameter der virtuellen Maschine bereitzustellen; und
eine erste Auswahlempfangseinheit, die konfiguriert ist, Informationen über mindestens einen durch den Mieter ausgewählten Sicherheitsservicetyp zu empfangen;
wobei die Servicetyperfassungskomponente ferner umfasst:
eine zweite Auswahlempfangseinheit, die konfiguriert ist, eine durch eine Sicherheitskomponente gesendete Sicherheitsservicetypliste der virtuellen Maschine für den Fall zu empfangen, dass der Mieter auf ein Cloud-Computing-Rechenzentrum über ein Zugriffsgateway zugreift, und den mindestens einen durch den Mieter ausgewählten Sicherheitsservicetyp gemäß der Sicherheitsservicetypliste der virtuellen Maschine zu ermitteln.

13. Vorrichtung zum Anpassen des Sicherheitsservices nach Anspruch 12, wobei die Servicetyperfassungskomponente ferner umfasst:
eine dritte Anforderungsempfangseinheit, die konfiguriert ist, den mindestens einen Sicherheitsservicetyp der durch den Mieter gemieteten virtuellen Maschine zu ermitteln, nachdem sie eine durch den Mieter gesendete Anwendung einer virtuellen Maschine empfangen hat, wobei die Anwendung der virtuellen Maschine die durch den Mieter angeforderte virtuelle Maschine, die gemietet werden soll, den Parameter der virtuellen Maschine und mindestens einen durch den Mieter angeforderten Sicherheitsservicetyp enthält;
eine dritte optionale Ermittlungseinheit, die konfiguriert ist, optional mindestens einen Sicherheitsservicetyp des Mieters gemäß dem Parameter der virtuellen Maschine zu ermitteln; und
eine dritte Auswahleinheit, die konfiguriert ist, den optionalen mindestens einen durch den Mieter angeforderten Sicherheitsservicetyp als den mindestens einen durch den Mieter ausgewählten Sicherheitsservicetyp zu ermitteln.

## Revendications

1. Procédé pour personnaliser un service de sécurité, comprenant :
l'acquisition, par un centre de données d'infonuagique, d'au moins un type de service de sécurité sélectionné par un locataire, dans lequel le type de service de sécurité comprend au moins l'un des services suivants : service de détection de sécurité, service de protection de sécurité et le service de détection de sécurité comprend au moins l'un des services suivants : service d'analyse de sécurité, service d'analyse des vulnérabilités, service d'analyse de pages Web, service d'analyse anti-falsification, service d'analyse des ports, service d'analyse des chevaux de Troie et service de surveillance du trafic ; et le service de protection de sécurité comprend au moins l'un des services suivants : service de renforcement de mot de passe, service de prévention d'incorporation de chevaux de Troie, service antivirus, service de nettoyage de flux de données et service de pare-feu ; et
l'exécution, par le centre de données d'infonuagique, d'au moins un service de sécurité correspondant à l'au moins un type de service de sécurité selon l'au moins un type de service de sécurité sélectionné par le locataire ;
dans lequel l'acquisition, par le centre de données d'infonuagique, de l'au moins un type de service de sécurité sélectionné par le locataire comprend :
après la réception d'une liste de ressources envoyée par le locataire, la détermination, par le centre de données d'infonuagique, d'au moins un type de service de sécurité d'une machine virtuelle louée par le locataire, dans lequel la liste de ressources contient la machine virtuelle dont la location est demandée par le locataire et un paramètre de la machine virtuelle ;
la fourniture, par le centre de données d'infonuagique, d'au moins un type de service de sécurité déterminé approprié pour la machine virtuelle que le locataire doit sélectionner selon le paramètre de la machine virtuelle ; et
la réception, par le centre de données d'infonuagique, d'informations sur un ou plusieurs types de services de sécurité sélectionnés par le locataire.

2. Procédé pour personnaliser le service de sécurité selon la revendication 1, dans lequel la fourniture, par le centre de données d'infonuagique, des un ou plusieurs types de services de sécurité déterminés appropriés pour la machine virtuelle que le locataire doit sélectionner, comprend :
la génération, par le centre de données d'infonuagique, d'une liste de types de services de sécurité optionnels selon les informations sur les types de services de sécurité déterminés appropriés pour la machine virtuelle, dans lequel la liste de types de services de sécurité optionnels comprend plusieurs entrées et chaque entrée correspond à des informations sur un type de service de sécurité optionnel ;
dans lequel la réception, par le centre de données d'infonuagique, des informations sur les un ou plusieurs types de services de sécurité sélectionnés par le locataire comprend :
la réception, par le centre de données d'infonuagique, d'une liste de types de services de sécurité sélectionnés renvoyée par le locataire, dans lequel la liste de types de services de sécurité sélectionnés contient un ou plusieurs types de services de sécurité optionnels sélectionnés par le locataire.

3. Procédé pour personnaliser le service de sécurité selon la revendication 1, dans lequel la détermination, par le centre de données d'infonuagique, de l'au moins un type de service de sécurité de la machine virtuelle louée par le locataire après réception de la liste de ressources envoyée par le locataire comprend :
la détermination, par le centre de données d'infonuagique, de l'au moins un type de service de sécurité approprié pour la machine virtuelle en tant que type de service de sécurité optionnel selon le paramètre de la machine virtuelle.

4. Procédé pour personnaliser le service de sécurité selon la revendication 1, comprenant en outre :
la configuration d'une liste de types de services de sécurité de machine virtuelle du locataire dans un composant de sécurité d'une passerelle d'accès, dans lequel la liste de types de services de sécurité de machine virtuelle comprend l'au moins un type de service de sécurité sélectionné par le locataire.

5. Procédé pour personnaliser le service de sécurité selon la revendication 2, dans lequel l'acquisition, par le centre de données d'infonuagique, de l'au moins un type de service de sécurité sélectionné par le locataire comprend :
dans un cas où le locataire accède au centre de données d'infonuagique par l'intermédiaire d'une passerelle d'accès, l'envoi, par le composant de sécurité, de la liste de types de services de sécurité de machine virtuelle au centre de données d'infonuagique ; et
la détermination, par le centre de données d'infonuagique, selon la liste de types de services de sécurité de machine virtuelle, de l'au moins un type de service de sécurité sélectionné par le locataire.

6. Procédé pour personnaliser le service de sécurité selon la revendication 1, dans lequel l'acquisition, par le centre de données d'infonuagique, de l'au moins un type de service de sécurité sélectionné par le locataire comprend :
après la réception d'une application de machine virtuelle envoyée par le locataire, la détermination, par le centre de données d'infonuagique, d'au moins un type de service de sécurité d'une machine virtuelle louée par le locataire, dans lequel l'application de machine virtuelle transporte la machine virtuelle dont la location est demandée par le locataire, un paramètre de la machine virtuelle et l'au moins un type de service de sécurité demandé par le locataire ;
la détermination, par le centre de données d'infonuagique, de l'au moins un type de service de sécurité optionnel du locataire selon le paramètre de la machine virtuelle ; et
la détermination, par le centre de données d'infonuagique, d'au moins un type de service de sécurité optionnel demandé par le locataire comme l'au moins un type de service de sécurité sélectionné par le locataire.

7. Procédé pour personnaliser le service de sécurité selon la revendication 1, après l'exécution, par le centre de données d'infonuagique, du service de sécurité correspondant selon l'au moins un type de service de sécurité sélectionné par le locataire, comprenant en outre :
le renvoi, par le centre de données d'infonuagique, au locataire d'un résultat de l'exécution du service de sécurité correspondant à au moins un type de service de sécurité sélectionné par le locataire.

8. Procédé pour personnaliser un service de sécurité, comprenant :
la sélection, par un locataire, d'au moins un type de service de sécurité requis ; et
la soumission, par le locataire, de l'au moins un type de service de sécurité sélectionné à un centre de données d'infonuagique, pour demander au moins un service de sécurité correspondant à l'au moins un type de service de sécurité ;
dans lequel la sélection, par le locataire, de l'au moins un type de service de sécurité requis comprend :
l'envoi, par le locataire, d'une liste de ressources au centre de données d'infonuagique, la liste de ressources contenant une machine virtuelle dont la location est demandée par le locataire et un paramètre de la machine virtuelle ;
la réception, par le locataire, d'au moins un type de service de sécurité renvoyé par le centre de données d'infonuagique selon le paramètre envoyé de la machine virtuelle, dans lequel le type de service de sécurité comprend au moins l'un des services suivants : service de détection de sécurité, service de protection de sécurité et le service de détection de sécurité comprend au moins l'un des services suivants : service d'analyse de sécurité, service d'analyse des vulnérabilités, service d'analyse de pages Web, service d'analyse anti-falsification, service d'analyse des ports, service d'analyse des chevaux de Troie et service de surveillance du trafic ; et le service de protection de sécurité comprend au moins l'un des services suivants : service de renforcement de mot de passe, service de prévention d'incorporation de chevaux de Troie, service antivirus, service de nettoyage de flux de données et service de pare-feu ; et
la sélection, par le locataire, d'au moins un type de service de sécurité optionnel à partir d'une liste de types de services de sécurité optionnels ;
dans lequel la réception, par le locataire, de l'au moins un type de service de sécurité renvoyé par le centre de données d'infonuagique est mise en œuvre comme suit :
la réception, par le locataire, de la liste de types de services de sécurité optionnels renvoyée par le centre de données d'infonuagique, la liste de types de services de sécurité optionnels comprenant plusieurs entrées et chaque entrée correspondant à des informations sur un type de service de sécurité optionnel.

9. Procédé pour personnaliser le service de sécurité selon la revendication 8, dans lequel la soumission, par le locataire, de l'au moins un type de service de sécurité sélectionné au centre de données d'infonuagique et la demande du service de sécurité correspondant comprend :
la génération, par le locataire, d'une liste de types de services de sécurité sélectionnés selon les informations concernant l'au moins un type de service de sécurité optionnel sélectionné, la liste de types de services de sécurité sélectionnés contenant au moins un type de service de sécurité optionnel sélectionné par le locataire ; et
l'envoi, par le locataire, de la liste de types de services de sécurité sélectionnés au centre de données d'infonuagique.

10. Procédé pour personnaliser le service de sécurité selon la revendication 8, dans lequel la sélection, par le locataire, de l'au moins un type de service de sécurité requis comprend :
la configuration, par le locataire, d'une liste de types de services de sécurité de machine virtuelle du locataire dans un composant de sécurité d'une passerelle d'accès, la liste de types de services de sécurité de machine virtuelle comprenant l'au moins un type de service de sécurité sélectionné par le locataire ;
dans lequel la soumission, par le locataire, de l'au moins un type de service de sécurité sélectionné au centre de données d'infonuagique et la demande du service de sécurité correspondant comprend :
dans le cas où le locataire accède au centre de données d'infonuagique par l'intermédiaire de la passerelle d'accès, l'envoi, par le composant de sécurité, de la liste de types de services de sécurité de machine virtuelle au centre de données d'infonuagique.

11. Procédé pour personnaliser le service de sécurité selon la revendication 8, dans lequel la soumission, par le locataire, de l'au moins un type de service de sécurité sélectionné au centre de données d'infonuagique et la demande du service de sécurité correspondant comprend :
l'envoi, par le locataire, d'une application de machine virtuelle au centre de données d'infonuagique, l'application de machine virtuelle transportant la machine virtuelle dont la location est demandée par le locataire, le paramètre de la machine virtuelle et l'au moins un type de service de sécurité demandé par le locataire.

12. Dispositif pour personnaliser un service de sécurité, comprenant :
un composant d'acquisition de type de service, configuré pour acquérir au moins un type de service de sécurité sélectionné par un locataire, dans lequel le type de service de sécurité comprend au moins l'un des services suivants : service de détection de sécurité, service de protection de sécurité et le service de détection de sécurité comprend au moins l'un des services suivants : service d'analyse de sécurité, service d'analyse des vulnérabilités, service d'analyse de pages Web, service d'analyse anti-falsification, service d'analyse des ports, service d'analyse des chevaux de Troie et service de surveillance du trafic ; et le service de protection de sécurité comprend au moins l'un des services suivants : service de renforcement de mot de passe, service de prévention d'incorporation de chevaux de Troie, service antivirus, service de nettoyage de flux de données et service de pare-feu ; et
un composant d'exécution de service, configuré pour exécuter un service de sécurité correspondant selon l'au moins un type de service de sécurité sélectionné par le locataire ;
dans lequel le composant d'acquisition de type de service comprend :
une première unité de réception de demande, configurée pour déterminer au moins un type de service de sécurité d'une machine virtuelle louée par le locataire après réception d'une liste de ressources envoyée par le locataire, dans lequel la liste de ressources contient la machine virtuelle dont la location est demandée par le locataire et un paramètre de la machine virtuelle ;
une première unité de fourniture de services, configurée pour fournir au moins un type de service de sécurité déterminé approprié pour la machine virtuelle que le locataire doit sélectionner selon le paramètre de la machine virtuelle ; et
une première unité de réception de sélection, configurée pour recevoir des informations sur au moins un type de service de sécurité sélectionné par le locataire ;
dans lequel le composant d'acquisition de type de service comprend en outre :
une deuxième unité de réception de sélection, configurée pour recevoir une liste de types de services de sécurité de machine virtuelle envoyée par un composant de sécurité dans le cas où le locataire accède à un centre de données d'infonuagique par le biais d'une passerelle d'accès, et déterminer l'au moins un type de service de sécurité sélectionné par le locataire selon la liste de types de services de sécurité de machine virtuelle.

13. Dispositif pour personnaliser le service de sécurité selon la revendication 12, dans lequel le composant d'acquisition de type de service comprend en outre :
une troisième unité de réception de demande, configurée pour déterminer l'au moins un type de service de sécurité de la machine virtuelle louée par le locataire après réception d'une application de machine virtuelle envoyée par le locataire, l'application de machine virtuelle contenant la machine virtuelle dont la location est demandée par le locataire, le paramètre de la machine virtuelle et au moins un type de service de sécurité demandé par le locataire ;
une troisième unité de détermination optionnelle, configurée pour déterminer au moins un type de service de sécurité optionnel du locataire selon le paramètre de la machine virtuelle ; et
une troisième unité de sélection, configurée pour déterminer l'au moins un type de service de sécurité optionnel demandé par le locataire comme l'au moins un type de service de sécurité sélectionné par le locataire.
